## Europäisches Patentamt

## European Patent Office

## Office européen des brevets

(11) Veröffentlichungsnummer: **0 599 982 B1**

## (12) EUROPÄISCHE PATENTSCHRIFT

(45) Veröffentlichungstag der Patentschrift: **12.04.95**

(51) Int. Cl.6: **B60K 31/04**, B60L 15/20

(21) Anmeldenummer: **92918407.5**

(22) Anmeldetag: **25.08.92**

(86) Internationale Anmeldenummer:
**PCT/DE92/00711**

(87) Internationale Veröffentlichungsnummer:
**WO 93/03940 (04.03.93 93/06)**

(54) **VERFAHREN ZUR VERÄNDERUNG DER GESCHWINDIGKEIT EINES FAHRZEUGES UND FAHRZEUG ZUR DURCHFÜHRUNG DIESES VERFAHRENS.**

(30) Priorität: **26.08.91 DE 4128627**

(43) Veröffentlichungstag der Anmeldung:
**08.06.94 Patentblatt 94/23**

(45) Bekanntmachung des Hinweises auf die Patenterteilung:
**12.04.95 Patentblatt 95/15**

(84) Benannte Vertragsstaaten:
**DE ES FR GB IT SE**

(56) Entgegenhaltungen:
**EP-A- 0 142 633
EP-A- 0 424 868
DE-A- 2 701 567
DE-A- 3 721 605
US-A- 3 845 368**

(73) Patentinhaber: **MANNESMANN Aktiengesellschaft
Postfach 10 36 41
D-40027 Düsseldorf (DE)**

(72) Erfinder: **ADLER, Uwe
Baunachweg 4
D-97422 Schweinfurt (DE)**
Erfinder: **DREXL, Hans-Jürgen
Kaltenhöfer Steige 11
D-97453 Schonungen/Mbg. (DE)**
Erfinder: **LUTZ, Dieter
Spessartstrasse 12
D-97422 Schweinfurt (DE)**
Erfinder: **NAGLER, Franz
Am Zehntgrafen 12
D-97503 Ottendorf (DE)**
Erfinder: **OCHS, Martin
Ebersbergstrassse 10
D-97422 Schweinfurt (DE)**
Erfinder: **SCHIEBOLD, Stefan
Gymnasiumstrasse 4
D-97421 Schweinfurt (DE)**
Erfinder: **SCHMIDT-BRÜCKEN, Hans-Joachim
Sonnenstrasse 9
D-97505 Geldersheim (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

Erfinder: **THIELER, Wolfgang**
**Kastanienweg 1**
**D-97437 Hassfurt (DE)**
Erfinder: **WAGNER, Michael**
**Ottostrasse 3**
**D-97464 Niederwerrn (DE)**
Erfinder: **WESTENDORF, Holger**
**Gänseleite 8**
**D-97456 Hambach (DE)**
Erfinder: **WYCHNANEK, Rainer**
**Erlenbrunnstrasse 13**
**D-97532 Madenhausen (DE)**


(74) Vertreter: **Meissner, Peter E., Dipl.-Ing. et al**
**Meissner & Meissner,**
**Patentanwaltsbüro,**
**Hohenzollerndamm 89**
**D-14199 Berlin (DE)**

**Beschreibung**

Die Erfindung betrifft ein verfahren zur Veränderung der Geschwindigkeit eines Fahrzeuges mit Antriebsrädern und mit stufenloser Drehzahl/Drehmoment-Charakteristik im Antriebsstrang gemäß dem Oberbegriff des Patentanspruches 1 sowie ein Fahrzeug zur Durchführung dieses Verfahrens.

Während bei schienengebundenen Fahrzeugen elektromotorische Antriebe seit vielen Jahrzehnten üblich sind, werden bisher derartige Antriebe in Straßenfahrzeugen nur in wenigen Sonderfällen eingesetzt. Insbesondere im Bereich des Personenkraftfahrzeugbaues handelt es sich dabei im Regelfall um Experimentierfahrzeuge. Nach wie vor werden Straßenfahrzeuge normalerweise mit einem Verbrennungsmotor ausgerüstet, der über einen mechanischen Antriebsstrang auf die Antriebsräder wirkt. Um bei unterschiedlichen Fahrgeschwindigkeiten einen für die jeweilige Fahrsituation günstigen Bereich aus der Drehzahl/Drehmoment-Kennlinie des Verbrennungsmotors nutzen zu können, ist im Antriebsstrang üblicherweise jeweils ein handbetätigtes Schaltgetriebe oder ein Automatikschaltgetriebe mit hydraulischem Drehmomentwandler Vorgesehen. Damit wird erreicht, daß der Fahrer, der bei gegebener Fahrzeuggeschwindigkeit durch entsprechende Veränderung der Gaspedalstellung (Fahrpedat) einen Beschleunigungsvorgang durchführt, durch die Wahl des Getriebegangs die Möglichkeit hat, unterschiedliche Bereiche aus der Drehzahl/Drehmoment-Kennlinie und somit unterschiedliche Leistungsstufen für den Beschleunigungsvorgang zu nutzen.

Bei elektromotorischen Antrieben, insbesondere Antrieben mit Gleichstrommotoren mit einem permanent erregten Stator oder Rotor und einem damit korrespondierenden, mit über eine Leistungselektronik angesteuerten Elektromagneten versehenen Rotor bzw. Stator, ist die Möglichkeit gegeben, innerhalb weit gesteckter Grenzen praktisch beliebige Drehzahl/Drehmoment-Kombinationen einzustellen, so daß hierbei von stufenloser Drehzahl/Drehmoment-Charakteristik oder Drehzahl/Leistungs-Charakteristik gesprochen werden kann. Es gibt auch Fahrzeuge mit mechanischem Antriebsstrang (CVT-Getriebe), die ähnliche Freiheiten bezüglich der übersetzungsvariationen bieten.

Aufgrund dieser besonderen Eigenschaften besteht bei derartigen Fahrzeugen, selbst wenn diese hohe Endgeschwindigkeiten (z.B. 200 km/h) aufweisen, keine Notwendigkeit für das Vorhandensein eines manuellen oder automatisch betätigten Schaltgetriebes im Antriebsstrang. Damit entfällt aber für den Fahrer des Fahrzeuges gleichzeitig die Möglichkeit, durch Betätigung des Getriebeschalthebels oder Fahrstufenwahlhebels den Zeitbedarf zur Durchführung einer gewünschten Geschwindigkeitsänderung, d. h. die Größe des Beschleunigungswertes durch die Wahl eines "Fahrgangs" wesentlich zu beeinflussen. Ihm steht an sich zur Mitteilung seines "Fahrwunsches" an das Fahrzeug lediglich die Möglichkeit einer Betätigung des Fahrpedals zur Verfügung. Das bedeutet, daß er die an sich differenziert zu sehenden Wünsche nach einer bestimmten Zielgeschwindigkeit und nach der Größe der Beschleunigung zur Erreichung dieser Zielgeschwindigkeit dem Fahrzeug nicht gesondert mitteilen kann.

Dementsprechend wird bei bekannten Fahrzeugen mit elektromotorischem Antrieb die aktuelle Stellung des Fahrpedals als Bestimmungsgröße für das vom Fahrer jeweils gewünschte Antriebsdrehmoment oder die gewünschte Antriebsleistung interpretiert und entsprechend der Kennlinie des Antriebs unmittelbar angesteuert. Die Auswahl eines bestimmten Antriebsdrehmomentes M bedeutet bei gegebener Drehzahl n gleichzeitig die Auswahl einer bestimmten Antriebsleistung P, da die folgende Beziehung gilt:

$$P = M \times n$$

Eine Erhöhung des im stationären Fahrbetrieb (d.h. bei konstanter Geschwindigkeit) anliegenden Antriebsdrehmomentes (oder der Antriebsleistung) führt dazu, daß das Fahrzeug solange beschleunigt wird, bis das erhöhte Antriebsdrehmoment wieder im Gleichgewicht steht ("stationärer Betrieb") mit dem durch die aktuellen Fahrwiderstandskräfte (insbesondere Luft- und Rollwiderstand) hervorgerufenen Gegenmoment.

Im Falle eines konventionell angetriebenen Fahrzeugs mit Verbrennungsmotor wird das vom Fahrer gewünschte neue Antriebsdrehmoment nie schlagartig erreicht, sondern stellt sich erst entsprechend der Kennlinie des Verbrennungsmotors mit zunehmender Drehzahl allmählich ein, wenn man von der Situation eines Fahrgangwechsels einmal absieht, bei dem eine sprunghafte Änderung der Drehzahl/Drehmoment-Kombination zwangsläufig erfolgt.

Bei einem Antriebskonzept mit stufenloser Drehzahl/Drehmoment-Charakteristik, wie sie insbesondere bei Elektromotoren vorliegen, die beispielsweise aus EP 0 094 978 A1, DE 34 14 314 A1, DE 38 16 651 A1 oder WO 89/08346 bekannt sind, muß die Antriebssteuerung des Fahrzeuges vorgeben, auf welche Werte die Antriebsparameter Drehzahl und Drehmoment bzw. Leistung während des Beschleunigungsvorganges, d. h. bis zum Erreichen des gewünschten neuen Fahrzustands einzustellen sind. Der tibergang von der (stationären) Fahrsituation zu Beginn des Beschleunigungsvorganges zur gewünschten Fahrsituation könnte beispielsweise stets mit dem maximal möglichen Drehmoment bzw. mit maximaler Leistung durchgeführt werden. Damit wäre eine ständige "sportliche" Fahrweise verbunden, die allerdings in vielen Fällen vom Fahrer wohl als wenig komfortabel empfunden wurde. Es könnten aber auch geringere Werte für die Durchführung solcher Beschleunigungsvorgänge fest vorgegeben werden, was aber den Nachteil hätte, daß sich das Fahrzeug in Fällen, in denen besonders hohe Beschleunigungswerte wünschenswert sind (z.B. Überholen), zu träge verhielte. Dem könnte im Prinzip dadurch abgeholfen werden, daß der Antriebsteuerung des Fahrzeuges über einen Wählschalter mitgeteilt wird, ob der Fahrer eine sportlichere oder eine komfortablere Fahrweise wünscht. Allerdings muß der Umstand, daß in einer Gefahrensituation die Betätigung eines solchen Wählschalters erforderlich werden könnte, als außerordentlich nachteilig angesehen werden. Hinzu kommt, daß ein Antriebskonzept mit stufenloser Drehzahl/Drehmoment-Charakteristik beim Fahrer auf Akzeptanzprobleme stoßen konnte, wenn sich das Fahrzeug im Grundsatz wesentlich anders verhalten würde, als er dies bei konventionell angetriebenen Fahrzeugen gewohnt ist. Dies gilt auch für den "negativen" Beschleunigungsfall, d.h. für die Einstellung eines Bremsmomentes, wenn der Fahrer die Stellung des Fahrpedals zurücknimmt.

Weiterhin ist aus der DE 37 27 690 A1 ein Fahrzeug mit einem Antriebsschlupfregelungssystem (ASR) bekannt, das ein gestuftes Getriebe im Antriebsstrang aufweist und bei dem zur Verbesserung der Fahrstabilität eine elektronische Steuerung eine spezielle Umsetzung der jeweiligen Stellung des vom Fahrzeugführer betätigten Fahrpedals in ein Motormoment vorsieht. Außerhalb des Regelbetriebs des ASR wird das Motormoment an sich wie üblich unmittelbar entsprechend einer vorgegebenen Kennlinie von der jeweiligen Stellung des Fahrpedals bestimmt. Allerdings ist dieser Zusammenhang auf den unteren Verstellbereich des Fahrpedals beschränkt. Zur leichteren Bewältigung kritischer Fahrsituationen, die zum Beispiel durch eine plötzliche Änderung des Reibbeiwertes der Fahrbahn bedingt sein können, wird vorgeschlagen, für den oberen Verstellbereich des Fahrpedals eine zweite Kennlinie vorzusehen, die der jeweiligen Fahrpedalstellung einen Wert für den Sollschlupf der Antriebsräder zuordnet. Somit wird das Motormoment nur indirekt vorgegeben, und zwar in Abhängigkeit von der jeweiligen Fahrsituation (Reibbeiwert, Größe der Seitenkräfte usw.). Über die Problematik der Durchführung von Geschwindigkeitsveränderungen an Fahrzeugen mit stufenloser Drehzahl/Drehmoment-Charakteristik im Antriebsstrang durch Betätigung eines Fahrpedals finden sich in dieser Schrift keine Hinweise.

Die vorliegende Erfindung hat sich daher die Aufgabe gestellt, ein Verfahren und eine Vorrichtung zu dessen Durchführung anzugeben, die es dem Fahrer gestatten, auf für ihn möglichst unkomplizierte und sichere Weise die aktuelle Fahrzeuggeschwindigkeit auf einen gewünschten anderen Wert zu bringen.

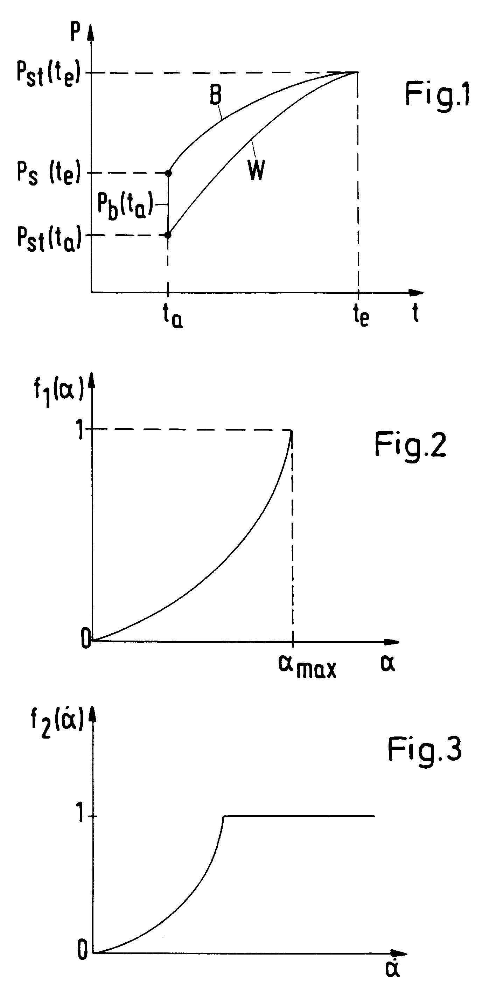

Gelöst wird diese Aufgabe erfindungsgemäß hinsichtlich des Verfahrens mit den Merkmalen des Patentanspruchs 1 und hinsichtlich der Vorrichtung mit den Merkmalen des Patentanspruchs 19. Vorteilhafte Weiterbildungen der Erfindung sind hinsichtlich des Verfahrens durch die Merkmale der Unteransprüche 2 bis 18 und hinsichtlich der Vorrichtung durch die Merkmale der Unteransprüche 20 bis 21 gekennzeichnet. Im folgenden wird die Erfindung mit Bezugnahme auf die Figuren 1 bis 9 näher erläutert.

Es zeigen:

Figur 1      ein Diagramm der Antriebsleistung in Abhängigkeit von der Zeit

Figur 2      ein Diagramm eines Gewichtungsfaktors $f_1$ in Abhängigkeit von der Fahrpedalstellung $\alpha$

Figur 3      ein Diagramm eines Gewichtungsfaktors $f_2$ in Abhängigkeit von der Betätigungsgeschwindigkeit $\dot{\alpha}$ des Fahrpedals

Figur 4      ein Diagramm zweier Gewichtungsfaktoren $f_3$ und $f_4$ in Abhängigkeit von der Antriebsleistung $P_s(\alpha_a)$ bzw. $P_s(\alpha_e)$

Figur 5      ein Diagramm des zeitlichen Verlaufs der Antriebsleistung während eines Beschleunigungsvorganges

Figur 6      ein Diagramm eines Gewichtungsfaktors $f_5$ in Abhängigkeit von der Zeit

Figur 7      ein Diagramm eines Gewichtungsfaktors $f_1$ in Abhängigkeit von der Fahrpedalstellung

Figur 8      ein Diagramm eines Gewichtungsfaktors $g$ in Abhängigkeit von der jeweiligen Fahrzeuggeschwindigkeit

Figur 9      ein Diagramm für eine Übergangsfunktion $h$ bei kombinierter Momenten- und Leistungssteuerung in Abhängigkeit von der Fahrzeuggeschwindigkeit

Die nachfolgenden Erläuterungen der Erfindung beschränken sich im wesentlichen auf eine exemplarische "Standardsituation", bei der das Fahrpedal von einer Stellung $\alpha_a$, die in einem stationären Fahrbetrieb vorgelegen hat, in eine geänderte Stellung $\alpha_e$ gebracht wird, die einem vom Fahrer gewünschten stationären Fahrbetrieb entspricht. Es wird dabei unterstellt, daß das Fahrzeug auf eine höhere Geschwindigkeit beschleunigt werden soll. Selbstverständlich ist das erfindungsgemäße Verfahren auch dann entsprechend anwendbar, wenn von einem nichtstationären Fahrbetrieb ausgegangen wird und/oder die Fahrpedalstellung vor Erreichen des jeweiligen angestrebten neuen stationären Fahrzustandes bereits wieder geändert wird.

4

Weiterhin sei darauf hingewiesen, daß sich die in den nachfolgenden Erläuterungen angegebenen Formelzeichen durchweg auf zeitabhängige Variable beziehen. So ist die Stellung $\alpha$ des Fahrpedals eine Funktion der Zeit:

$$\alpha = \alpha(t)$$

Die einer Fahrpedalstellung als Vorgabewert zugeordnete vom Fahrer gewünschte Antriebsleistung $P_v = P_v(\alpha)$ ist somit letztlich ebenfalls eine zeitabhängige Variable:

$$P_v = P_v(\alpha(t))$$

Verkürzte Schreibweise: $P_v = P_v(t)$
Ein der Antriebssteuerung des Fahrzeugs übermittelter Sollwert der Antriebsleistung $P_s$ ist eine Funktion der Zeit t und des Leistungsvorgabewertes $P_v$:

$$P_s = P_s(P_v(t), t)$$

Verkürzte Schreibweise: $P_s = P_s(t)$
Bei Bezugnahme auf das Antriebsdrehmoment werden nachfolgend entsprechende Formelzeichen benutzt, wobei anstelle von "P" jeweils "M" gesetzt wird.

In Figur 1 ist schematisch für ein Fahrzeug mit Verbrennungsmotor und festem übersetzungsverhältnis der zeitliche Verlauf der Antriebsleistung P(t) während eines Beschleunigungsvorganges dargestellt, der im Zeitintervall von von $t_a$ bis $t_e$ stattfindet. Bei einer Darstellung des Antriebsdrehmomentes M(t) würde sich ein im grundsätzlichen Kurvenverlauf ähnliches Bild ergeben, so daß hierauf nicht gesondert eingegangen werden muß.

Der untere Kurvenzug W gibt qualitativ die Fahrwiderstandskurve wieder, zeigt also für jeden Zeitpunkt des Beschleunigungsvorganges die durch die auf das Fahrzeug von außen einwirkenden Fahrwiderstandskräfte momentan verbrauchte Leistung für den Fall konstant bleibender Geschwindigkeit. Im stationären Fahrzustand, wie er bis zum Zeitpunkt $t_a$ und ab dem Zeitpunkt $t_e$ gegeben ist, steht diese Leistung der Fahrwiderstandskräfte im Gleichgewicht mit der tatsächlich abgegebenen Antriebsleistung $P_{st}(t_a)$ bzw. $P_{st}$-($t_e$). Durch die Betätigung des Gaspedals im Zeitpunkt $t_a$ erhöht der Fahrer die bisherige Antriebsleistung $P_{st}(t_a)$ nahezu augenblicklich auf den Wert $P(t_a)$, der sich bei der gerade anliegenden Drehzahl und der Drosselklappenstellung (entspricht Fahrpedalstellung) des Verbrennungsmotors entsprechend seiner Drehzahl/Drehmoment-Kennlinie ergibt. Der Betrag $P_b(t_a)$, um den die neue Antriebsleistung $P(t_a)$ größer ist als die Leistung der äußeren Fahrwiderstandskräfte, steht als Beschleunigungsleistung zur Geschwindigkeitserhöhung zur Verfügung. Entsprechend der Kennlinie des Verbrennungsmotors nimmt die Antriebsleistung bei steigender Drehzahl kontinuierlich weiter zu (oberer Kurvenzug B), bis die Antriebsleistung $P_{st}(t_e)$ erreicht ist, die der Stellung des Gaspedals entspricht und die im Gleichgewicht mit der Leistung der äußeren Fahrwiderstandskräfte steht.

Wenn nun, wie vorstehend bereits erwähnt, bei einem Fahrzeug ein Antrieb vorhanden ist, der sich (innerhalb weiter Grenzen) auf nahezu beliebige Drehmomente oder Leistungen bei gegebener Drehzahl (d. h. bei gegebener Fahrgeschwindigkeit) einstellen läßt, dann verhält sich ein solches Fahrzeug völlig anders als ein konventionell angetriebenes, da der jeweils vom Fahrer signalisierte Momenten- oder Leistungswunsch praktisch augenblicklich eingestellt wird, d.h. so schnell, wie der Verbrennungsmotor auf den neuen Leistungspunkt gebracht werden kann. Ein solches Fahrzeug reagiert daher sehr "unruhig" und erschwert dem Fahrer beispielsweise das übliche "Mitschwimmen" im Straßenverkehr.

Zur Lösung dieser Schwierigkeit sieht die Erfindung eine andere Charakteristik des Fahrpedals vor, d. h. eine andere Reaktion der elektronischen Antriebssteuerung des Fahrzeugantriebs auf vorgenommene Änderungen der Stellung des Fahrpedals. Hierbei erfolgt die Veränderung der Fahrzeuggeschwindigkeit ohne die Notwendigkeit der Betätigung einer gesonderten Fahrgang- oder Fahrcharakteristik-Wähleinrichtung allein als Folge einer Betätigung des Fahrpedals durch den Fahrer. Jeder Fahrpedalstellung $\alpha(t)$ ist dabei ein eindeutig bestimmter Wert für die gewünschte Antriebsleistung $P_v(\alpha)$ oder das gewünschte Antriebsdrehmoment $M_v(\alpha)$ zugeordnet.

Diese Zuordnung ist in einer zusätzlichen elektronischen Steuereinheit, die als Sollwertgeber für die elektronische Antriebssteuerung fungiert, oder in der Antriebssteuerung selbst in Form von Tabellen oder als Funktion hinterlegt.

Es gilt die Beziehung:

$$M_v(\alpha) = M_{max} \times f_1(\alpha)$$
$$\text{bzw. } P_v(\alpha) = P_{max} \times f_1(\alpha),$$

wobei $M_{max}$ das maximale Antriebsdrehmoment, $P_{max}$ die maximale Antriebsleistung und $f_1(\alpha)$ einen von der Fahrpedalstellung $\alpha(t)$ abhängigen Faktor mit einem Wert zwischen 0 und 1 darstellen. Der funktionale Zusammenhang zwischen der Fahrpedalstellung $\alpha(t)$ und dem Wert von $f_1(\alpha)$ kann beispielsweise linear sein. Vorteilhafter ist jedoch ein progressiver Funktionsverlauf, wie er schematisch in Fig. 2 dargestellt ist, der eine besonders gute Dosierbarkeit kleiner Leistungen oder Momente gewährleistet. Über einen Meßwertgeber wird die jeweilige Fahrpedalstellung $\alpha(t)$ ermittelt und signaltechnisch an die zusätzliche elektronische Steuereinheit gegeben. Letztere erfaßt und speichert die unmittelbar zu Beginn $(t_a)$ eines Beschleunigungsvorganges gegebene Anfangsstellung $\alpha_a$ des Fahrpedals sowie dessen Endstellung $\alpha_e$, mit der der Fahrer seinen Wunsch zur Geschwindigkeitsänderung signalisiert hat. Erfindungsgemäß ist vorgesehen, daß der Sollwert des Antriebsdrehmoments $M_s(t_a)$ oder der Antriebsleistung $P_s(t_a)$, die bei stationärem Fahrbetrieb den der Fahrpedalstellung $\alpha_a$ zugeordneten Werten $M_{st}(\alpha_a)$ bzw. $P_{st}(\alpha_a)$ entsprechen, sprunghaft um einen bestimmten Wert erhöht wird und daß dann die Antriebsleistung $P(t)$ bzw. das Antriebsdrehmoment $M(t)$ zeitabhängig bis auf den der Fahrpedalstellung $\alpha_e$ zugeordneten Wert $P_v(\alpha_e)$ bzw. $M_v(\alpha_e)$ verändert wird.

Die sprunghafte Erhöhung von Antriebsdrehmoment oder -leistung um das Beschleunigungsmoment $M_b(t_a)$ bzw. die Beschleunigungsleistung $P_b(t_a)$ erfolgt gemäß der Beziehung

$$M_b(t_a) = F \times (M_v(\alpha_e) - M_s(\alpha_a))$$
$$\text{bzw. } P_b(t_a) = F \times (P_v(\alpha_e) - P_s(\alpha_a)),$$

wobei F einen Gewichtungsfaktor im Wertebereich 0 bis 1 darstellt. $M_s(\alpha_a)$ und $P_s(\alpha_a)$ sind Antriebsdrehmoment bzw. Antriebsleistung, die im Augenblick unmittelbar vor Beginn des Beschleunigungsvorganges, wenn sich das Fahrpedal noch in der Stellung $\alpha_a$ befand. $M_v(\alpha_e)$ und $P_v(\alpha_e)$ sind die gewünschten Werte für Antriebsdrehmoment bzw. Antriebsleistung entsprechend der gewählten Fahrpedalstellung $\alpha_e$.

Zur Festlegung des Gewichtungsfaktors F durch die zusätzliche elektronische Steuereinheit sind erfindungsgemäß drei bevorzugte Möglichkeiten gegeben. Besonders bevorzugt wird es, die Betätigungsgeschwindigkeit $\dot{\alpha}$ des Fahrpedals mittels eines Sensors durch die zusätzliche elektronische Steuereinheit zu erfassen und in Abhängigkeit von dem ermittelten Wert $\dot{\alpha}$ die Größe von F zu bestimmen. Hierzu können entsprechende Wertetabellen oder auch funktionale Zusammenhänge (linear oder nichtlinear) in der elektronischen Steuerung hinterlegt werden. Vorteilhaft ist ein progressiver Funktionsverlauf $F = f_2(\dot{\alpha})$, wie er in Fig. 3 dargestellt ist und der bei langsamer Betätigung des Fahrpedals tendenziell deutlich geringere Beschleunigungswerte hervorruft als bei schneller Betätigung. Somit hat der Fahrer beispielsweise die Möglichkeit, selbst bei sehr großer Differenz zwischen der augenblicklichen und der gewünschten Zielgeschwindigkeit letztere in einer "moderaten" Weise zu erreichen. Es ist sinnvoll, ab einer bestimmten Größe von $\dot{\alpha}$ dem Funktionswert $f_2(\dot{\alpha})$ stets den Maximalwert 1 zuzuordnen, wie dies in Figur 3 angedeutet ist. Als Sonderfall kann vorgesehen sein, $f_2(\dot{\alpha})$ konstant zu hatten, so daß dann die anfängliche Beschleunigungsleistung $P_b(t_a)$ (oder das Beschleunigungsmoment $M_b(t_a)$) allein von der Differenz $P_v(\alpha_e) - P_s(\alpha_a)$ (bzw. $M_v(\alpha_e) - M_s(\alpha_a)$) abhängig wäre.

Alternativ aber weniger bevorzugt ist die Möglichkeit, den Gewichtungsfaktor F in Abhängigkeit von der Größe der Antriebsleistung $P_s(\alpha_a)$ (oder des Antriebsdrehmomentes) festzulegen, die der Fahrpedalstellung $\alpha_a$ unmittelbar vor der Einleitung des Beschleunigungsvorganges entspricht:

$$F = f_3(P_s(\alpha_a))$$

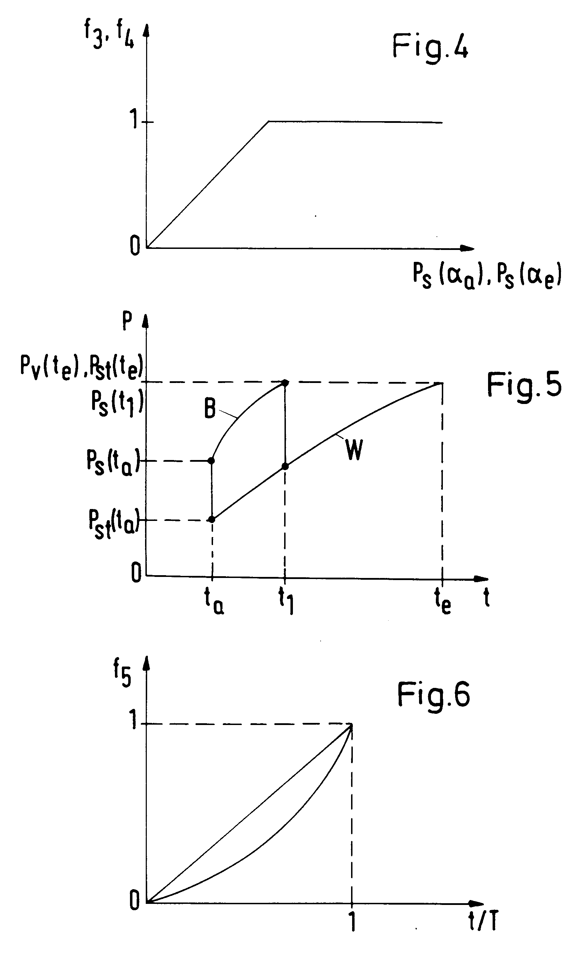

In der Tendenz sollte $f_3(P_s(\alpha_a))$ um so größer sein, je größer $P_s(\alpha_a)$ ist. Der Zusammenhang kann nichtlinear oder aber auch linear ein, wie er in Figur 4 schematisch dargestellt ist. Dabei ist wiederum wie in Figur 3 vorgesehen, daß ab einem bestimmten Wert der unabhängigen Variablen $P_s(\alpha_a)$ stets der maximale Wert 1 dem Funktionswert $f_3(P_s(\alpha_a))$ zugeordnet wird.

Als dritte Möglichkeit ist vorgesehen, den Wert des Gewichtungsfaktors F anhand der Größe der vom Fahrer gewünschten neuen Antriebsleistung $P_v(\alpha_e)$ (oder des neuen Antriebsdrehmomentes), die der Fahrpedalstellung $\alpha_e$ entspricht, festzulegen:

$$F = f_4(P_v(\alpha_e))$$

Da hierfür sinngemäß das gleiche gilt wie für die funktionale Abhängigkeit von $P_s(\alpha_a)$ ist in Fig. 4 ein entsprechendes Beispiel durch denselben Kurvenzug dargestellt.

Im Hinblick auf den Übergang von der Antriebsleistung oder dem Antriebsdrehmoment

$$P_s(t_a) = P_{st}(\alpha_a) + P_b(t_a)$$

bzw. $M_s(t_a) = M_{st}(\alpha_a) + M_b(t_a)$

zu Beginn des Beschleunigungsvorganges zu der vom Fahrer gewünschten Antriebsleistung $P_v(t_e) = P_{st}(t_e)$ bzw. dem Antriebsdrehmoment $M_v(t_e) = M_{st}(t_e)$ sind wiederum mehrere Möglichkeiten vorgesehen. Dabei wird innerhalb eines kurzen Verstellzeitraums der Sollwert $P_s(t)$ bzw. $M_s(t)$ für die Antriebssteuerung kontinuierlich oder diskontinuierlich (stufenweise) bis auf den der Fahrpedalstellung $\alpha_e$ entsprechenden Vorgabewert $P_v(\alpha_e)$ bzw. $M_v(\alpha_e)$ verändert. Eine bevorzugte Lösung besteht darin, daß die Antriebsleistung oder das Antriebsdrehmoment während des Beschleunigungsvorganges in der Weise progressiv bis zum vorgesehenen Endwert $P_{st}(\alpha_e)$ bzw. $M_{st}(\alpha_e)$ gesteigert wird, daß die Beschleunigung des Fahrzeugs etwa konstant bleibt. Mit Erreichen des vorgesehenen Endwertes im Zeitpunkt $t_1$ bleibt die Antriebsleistung $P_s(t_1)$ bzw. das Antriebsdrehmoment $M_s(t_1)$ bis zur nächsten Veränderung der Fahrpedalstellung auf diesem Endwert, so daß die Beschleunigung des Fahrzeuges nach $t_1$ bis zum Ende $t_e$ des gesamten Beschleunigungsvorganges kontinuierlich bis auf Null absinkt. Diese Zusammenhänge sind in Fig. 5 schematisch für die Antriebsleistung dargestellt, wobei entsprechend Fig. 1 wiederum die Fahrwiderstandskurve W eingezeichnet ist. Man erkennt, daß die Beschleunigungsleistung $P_b(t_1)$ im Zeitpunkt $t_1$ bei Erreichen des Endwertes $P_s(t_1) = P_{st}(t_e)$ deutlich größer sein muß als zu Beginn des Beschleunigungsvorganges ($P_b(t_a)$). Im Zeitpunkt $t_e$ ist die Beschleunigungsleistung $P_b(t_e) = O$. Die gesamte Antriebsleistung wird dann für die Überwindung des Fahrwiderstandes benötigt.

Um die Beschleunigung des Fahrzeugs zu erfassen, kann ein Beschleunigungssensor vorgesehen sein; bevorzugt wird die Beschleunigung jedoch von der zusätzlichen elektronischen Steuereinheit aus der zeitlichen Ableitung der Drehzahlen der Antriebsräder ermittelt.

Nach einer anderen Ausführungsvariante der Erfindung kann für den Übergang von der anfänglichen Antriebsleistung $P_s(t_a)$ auf den Endwert $P_v(t_e)$ auch zeitabhängig nach der Beziehung erfolgen:

$$P_s(t) = P_s(t_a) + f_5(t/T) \times (P_v(t_e) - P_s(t_a))$$

Bei einer Steuerung des Antriebsdrehmomentes gilt die entsprechende Beziehung:

$$M_s(t) = M_s(t_a) + f_5(t/T) \times (M_v(t_e) - M_s(t_a))$$

Darin bedeutet T das Zeitintervall, in der der Übergang vorgenommen wird, und $f_5(t/T)$ einen zeitabhängigen Gewichtungsfaktor zwischen 0 und 1. In Fig. 6 sind exemplarisch als mögliche Kurvenverläufe für die von der zusätzlichen elektronischen Steuereinheit vorzunehmende Zuordnung der Funktionswerte $f_5$ in Abhängigkeit vom Zeitparameter $t/T$ ein linearer und ein progressiver Verlauf schematisch dargestellt. Es können auch andere Kurvenformen vorgesehen werden. Vorteilhaft ist es, die Größe des Zeitintervalls T abhängig zu machen von der Größe der Betätigungsgeschwindigkeit $\dot{\alpha}$ des Fahrpedals, wobei T um so kleiner sein sollte, je größer $\dot{\alpha}$ ist. Dies bewirkt in der Tendenz einen um so schnelleren Übergang zum vorgesehenen Endwert, also eine Verkürzung des Beschleunigungsvorgangs. Gleiches würde bewirkt, wenn die Kurvenverläufe gemäß Fig. 6 noch steiler gewählt würden, d. h. wenn der Höchstwert $f_5 = 1$ bereits für den Wert $t < T$ erreicht würde und danach konstant bliebe.

Besonders vorteilhaft wirkt sich die Erfindung bei einem Fahrzeug mit elektrischen Antriebsmotoren aus, die von einer Verbrennungsmotor/Generator-Einheit mit elektrischem Strom versorgt werden, wenn der Verbrennungsmotor in einem Zustand mit eindeutigem Zusammenhang zwischen Drehmoment und Drehzahl, also beispielsweise auf der verbrauchsoptimalen Drehmoment/Drehzahl- Kennlinie des Verbrennungsmotors betrieben wird. In diesem Fall kann die Antriebsleistung $P_s(t)$ nach der sprunghaften Erhöhung auf $P_s(t_a)$ proportional zur Zunahme der Drehzahl des Verbrennungsmotors gesteigert werden gemäß der Beziehung:

$$P_s(t) = P_s(t_a) + f_6 \left( \frac{n - n_a}{n_e - n_a} \right) \times (P_v(t_e) - P_s(t_a))$$

Darin bedeuten:

$f_6$ = drehzahlabhängiger Faktor zwischen 0 und 1

$n$ = aktuelle Drehzahl des Verbrennungsmotors

$n_a$ = Drehzahl des Verbrennungsmotors bei der Leistung $P_s(t_a)$

$n_e$ = Drehzahl des Verbrennungsmotors bei der Leistung $P_v(t_e)$

Die Zuordnung der Funktionswerte zum Faktor $f_6$ kann in entsprechender Weise wie beim Faktor $f_5$ erfolgen.

Eine solche Art der Antriebssteuerung signalisiert dem Fahrer ein Fahrzeugverhalten wie bei einem konventionell angetriebenen Fahrzeug mit Verbrennungsmotor.

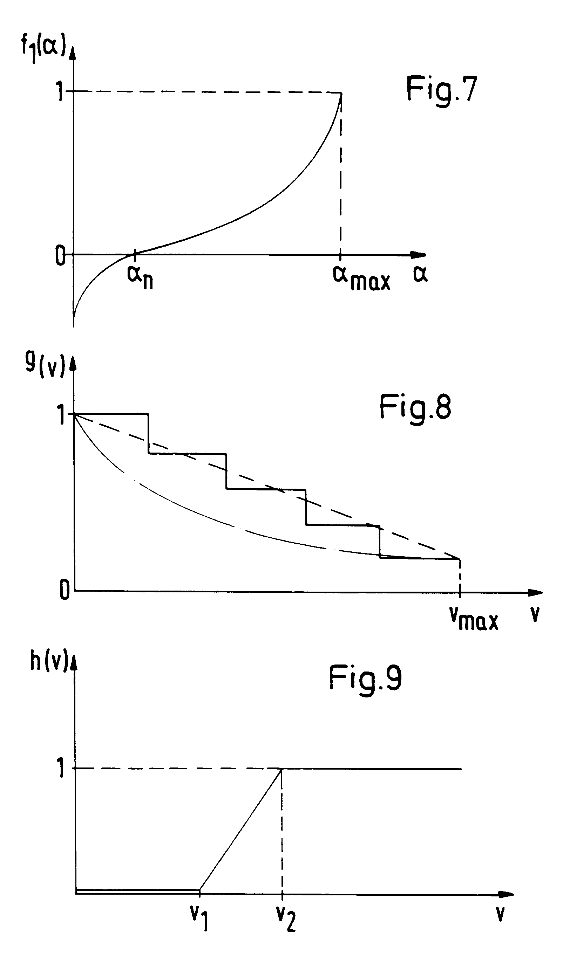

Neben dem Fall der Geschwindigkeitserhöhung, also dem Fall der positiven Fahrzeugbeschleunigung, ist auch der umgekehrte Fall der Fahrzeugverzögerung im Sinne der Erfindung steuerungstechnisch so lösbar, daß der Fahrer das Fahrzeugverhalten bei einer Rücknahme der aktuellen Stellung des Fahrpedals nicht als ungewöhnlich empfinden muß, weil er etwa keine Bremswirkung des Antriebsmotors verspürt. Um eine solche Bremswirkung erzeugen zu können, ist erfindungsgemäß vorgesehen, daß die zusätzliche elektronische Steuereinheit einer Neutralstellung $\alpha_n > 0$ des Fahrpedals das Antriebsdrehmoment bzw. die Antriebsleistung mit dem Wert Null zuordnet, während Fahrpedalstellungen zwischen Null und $\alpha_n$ jeweils negativen Werten des Antriebsdrehmomentes bzw. der Antriebsleistung entsprechen, also eine Bremsleistung bewirken. Bei elektromotorischem Antrieb kann das Bremsmoment durch Umschaltung der Elektromotoren auf Generatorbetrieb erzeugt werden. Ein möglicher funktionaler Zusammenhang für den Gewichtungsfaktor $f_1(\alpha)$ ist in Fig. 7 dargestellt. Dabei entspricht der Funktionsverlauf zwischen $\alpha_n$ und der Maximalstellung $\alpha_{max}$ des Fahrpedals praktisch dem Verlauf aus Fig. 2. Unterhalb von $\alpha_n$ nimmt mit kleiner werdendem $\alpha$ der Betrag des negativen Funktionswertes von $f_1$ zu, so daß auch das Bremsmoment $M_B$ zunimmt gemäß:

$$M_B(\alpha) = M_{max} \times f_1(\alpha)$$

Vorteilhaft ist es, das erzeugte Bremsmoment nicht allein von der Fahrpedalstellung abhängig zu machen, sondern in zeitlicher Hinsicht eine entsprechende Heranführung an den der Fahrpedalstellung zugeordneten Wert vorzusehen. Das bedeutet, daß zunächst nur ein Teilbetrag des gewünschten Bremsmomentes sprunghaft eingestellt wird und dann ein kontinuierlicher Übergang bis auf den vorgesehenen Endwert stattfindet, wie dies für den Fall der positiven Beschleunigung vorstehend bereits entsprechend dargestellt wurde. Hierbei bietet es sich allerdings als besonders vorteilhaft an, diesen Übergang von der jeweiligen Fahrzeuggeschwindigkeit v abhängig zu machen, d. h. das tatsächlich aufgebrachte Bremsmoment $M_B(t)$ nach der Beziehung zu bestimmen:

$$M_B(t) = M_B(\alpha) \times g(v)$$

Darin bedeutet $g(v)$ einen Gewichtungsfaktor zwischen 0 und 1, dessen Größe von der Fahrzeuggeschwindigkeit v abhängt.

Aus Fig. 8 sind beispielhaft ein linearer, ein degressiver und ein "sprungfixer" Verlauf des Funktionswertes $g(v)$ dargestellt. In der Tendenz wird der aufgebrachte Anteil des gewünschten Bremsmomentes um so größer, je kleiner die Fahrzeuggeschwindigkeit wird.

In Weiterbildung der Erfindung kann es vorteilhaft sein, den Wert der Fahrpedalbetätigungsgeschwindigkeit $\dot{\alpha}$ nicht in Form eines Differentialquotienten, sondern als Differenzenquotienten zu ermitteln:

$$\dot{\alpha} = \frac{\alpha(t_2) - \alpha(t_1)}{t_2 - t_1}$$

Für die Zeitdifferenz $t_2 - t_1$ kann nämlich ein Mindestwert vorgegeben werden, der dazu führt, daß unbeabsichtigte "Zitterbewegungen", also geringfügige und in sehr kurzen Zeiträumen erfolgende Hin- und Herbewegungen des Fahrpedals unberücksichtigt bleiben, also nicht zu Reaktionen der Antriebssteuerung führen. Je größer $t_2 - t_1$ gewählt wird, um so größer ist der erzielte Dämpfungseffekt. Als zweckmäßig kann eine Größenordnung von 100 - 200 ms angesehen werden.

Wie die vorstehende Beschreibung zeigt, kann die Antriebssteuerung des Fahrzeugs auf die Steuerung des Antriebsdrehmomentes oder der Antriebsleistung gerichtet werden. In Weiterbildung der Erfindung kann

EP 0 599 982 B1

auch eine Kombination beider Möglichkeiten vorgesehen werden, wobei entsprechend vorgegebener Entscheidungskriterien eine Umschaltung von der einen Steuerungsart auf die andere erfolgt. Besonders günstig ist es, bei niedrigen Fahrzeuggeschwindigkeiten eine Momentensteuerung anzuwenden, die einen "feinfühligen" Fahrbetrieb sicherstellt, und bei höheren Geschwindigkeiten auf Antriebsleistungssteuerung umzuschalten. Beispielsweise kann die Umschaltung kontinuierlich erfolgen, in dem in einem vorgegebenen Geschwindigkeitsbereich von $v_1$ bis $v_2$ eine Mischform der beiden Antriebssteuerungen mit einem gleitenden Übergang angewandt wird entsprechend der Beziehung:

$$P(\alpha, v) = (1-h(v)) \times M(\alpha) \times n_R + h(v) \times P(\alpha)$$

Dabei bedeuten $n_R$ die Drehzahl der Antriebsräder und h einen von der Fahrzeuggeschwindigkeit abhängigen Gewichtungsfaktor zwischen 0 und 1. In Fig. 9 ist ein möglicher Funktionsverlauf von h(v) dargestellt. Der Funktionswert h beträgt bis zur Geschwindigkeit $v_1$ Null, steigt dann linear mit zunehmender Geschwindigkeit bis auf den Maximalwert 1 und verharrt oberhalb der Geschwindigkeit $v_2$ auf diesem Maximalwert. Im Übergangsbereich könnte auch eine nichtlineare Funktion gewählt werden, insbesondere könnte, wie dies in Fig. 9 durch die gestrichelte vertikale Linie bei $v_2$ an gedeutet ist, auch eine sprunghafte Änderung des Funktionswertes von 0 auf 1 vorgesehen werden.

Mit besonderem Vorteil läßt sich die Erfindung auf Fahrzeuge anwenden, die mit permanent erregten Gleichstrommotoren mit elektronisch gesteuerter Kommutierung versehen sind, da hierbei die für die erfindungsgemäße Antriebssteuerung benötigten Prozeßdaten (insbesondere Drehzahl und Drehmoment) ohnehin als Daten für den "normalen" Elektromotorbetrieb ständig zur Verfügung stehen oder aus den verfügbaren Daten ohne weiteres abgeleitet werden können, so daß auf entsprechende zusätzliche Sensoren zur Datenerfassung weitestgehend verzichtet werden kann. Hinzu kommt, daß die antriebstechnischen Möglichkeiten derartiger Motoren voll ausgenutzt werden können, ohne daß dem Fahrer der Eindruck eines völlig anderen Fahrzeugverhaltens vermittelt wird. Vielmehr erlebt der Fahrer ein Fahrzeug, das im Grundsatz mit einem konventionell angetriebenen Fahrzeug mit Verbrennungsmotor vergleichbar ist, das ihm aber in quantitativer Hinsicht deutlich mehr Gestaltungsmöglichkeiten für seine Fahrerwünsche bietet, da hierbei praktisch beliebige Drehzahl-Drehmoment-Kombinationen einstellbar sind.

**Patentansprüche**

1. Verfahren zur Veränderung der Geschwindigkeit eines Fahrzeugs mit Antriebsrädern und mit stufenloser Drehzahl/Drehmomentcharakteristik im Antriebsstrang, insbesondere eines Fahrzeugs mit elektromotorischem Antrieb entsprechend einer vom Fahrer des Fahrzugs vorgenommenen Veränderung der Stellung $\alpha$ (t) eines Fahrpedals, wobei jeder Fahrpedalstellung $\alpha$ (t) eine bestimmte im Sinne eines Vorgabewertes gewünschte am Fahrzeug wirksame Antriebsleistung $P_v (\alpha) = f_1 (\alpha) \times P_{max}$(mit $P_{max}$ = maximale Antriebsleistung des Fahrzeugs) und/oder ein wirksames Antriebsdrehmoment $M_v (\alpha) = f_1 (\alpha) \times M_{max}$ (mit $M_{max}$ = maximales Antriebsdrehmoment des Fahrzeugs) zugeordnet sind, wobei der Vorgabewert als Sollwert für eine elektronische Antriebssteuerung des Fahrzeugs genutzt wird,
dadurch gekennzeichnet,
daß eine zusätzliche elektronische Steuereinheit den Vorgabewert $P_v$ (t) und/oder $M_v$ (t) in der Form als Sollwert $P_s$ (t) bzw. $M_s$ (t) für die elektronische Antriebssteuerung umsetzt, daß der Sollwert $P_s$ (t) bzw. $M_s$ (t) von der Antriebssteuerung in einem kurzen Verstellzeitraum bis auf den Vorgabewert $P_v$ (t) bzw. $M_v$ (t) verändert wird, wobei der Sollwert $P_s$ (t) bzw. $M_s$ (t) aus einem anfänglichen zum Vorgabewert $P_v$ (t) bzw. $M_v$ (t) proportionalen Anteil und einem zeitlich sich verändernden Restanteil additiv gebildet wird.

2. Verfahren nach Anspruch 1,
dadurch gekennzeichnet,
daß der proportionale Anteil zum Vorgabewert $P_v$ (t) bzw. $M_v$ (t) gebildet wird als Summe aus dem aktuellen Sollwert $P_s$ (t) bzw. $M_s$ (t) der Antriebssteuerung und dem Produkt aus einem Gewichtungsfaktor F, der zwischen 0 und 1 liegt, und der Differenz aus Vorgabewert Pv (t) bzw. $M_v$ (t) und aktuellem Sollwert $P_s$ (t) bzw. $M_s$ (t).

3. Verfahren nach Anspruch 2,
dadurch gekennzeichnet,
daß die Größe des Faktors F in Abhängigkeit von der Betätigungsgeschwindigkeit $\dot{\alpha}$ des Fahrpedals festgelegt wird:

9

EP 0 599 982 B1

$$F = f_2 (\dot{\alpha})$$

4. Verfahren nach Anspruch 2,
dadurch gekennzeichnet,
daß die Größe des Faktors F in Abhängigkeit vom aktuellen Sollwert $P_s(t)$ bzw. $M_s(t)$ der Antriebssteuerung festgelegt wird:

$$F = f_3 (P_s(t))$$
bzw. $F = f_3 (M_s(t))$

5. Verfahren nach Anspruch 2,
dadurch gekennzeichnet,
daß die Größe des Faktors F in Abhängigkeit vom Vorgabewert $P_v(t)$ bzw. $M_v(t)$ festgelegt wird:

$$F = f_4 (P_v(t))$$
bzw. $F = f_4 (M_v(t))$

6. Verfahren nach Anspruch 3,
dadurch gekennzeichnet,
daß der Funktionsverlauf des Gewichtungsfaktors $F = f_2 (\dot{\alpha})$ progressiv steigend gewählt wird und der Funktionswert F oberhalb eines vorgegebenen Schwellenwertes der Variablen $\dot{\alpha}$ auf dem konstanten Maximalwert 1 bleibt.

7. Verfahren nach Anspruch 4,
dadurch gekennzeichnet,
daß der Funktionsverlauf des Gewichtungsfaktors F linear ansteigend gewählt wird und der Funktionswert F oberhalb eines vorgegebene Schwellenwertes der Variablen $P_s(t)$ oder $M_s(t)$ auf dem konstanten Maximalwert 1 bleibt.

8. Verfahren nach Anspruch 5,
dadurch gekennzeichnet,
daß der Funktionsverlauf des Gewichtungsfaktors F linear ansteigend gewählt wird und der Funktionswert F oberhalb eines vorgegebenen Schwellenwertes der Variablen $P_v(t)$ oder $M_v(t)$ auf dem konstanten Maximalwert 1 bleibt.

9. Verfahren nach einem der Ansprüche 1 bis 8,
dadurch gekennzeichnet,
daß über einen Beschleunigungssensor oder über die zeitliche Ableitung der Drehzahlen der Antriebsräder die Fahrzeugbeschleunigung erfaßt wird und der Restanteil zur Einstellung des Sollwertes $P_s(t)$ bzw. $M_s(t)$ auf den Vorgabewert $P_v(t)$ bzw. $M_v(t)$ zeitlich so verändert wird, daß die Fahrzeugbeschleunigung zwischen dem Zeitpunkt des Erreichens der geänderten Fahrpedalstellung $\alpha(t)$ und dem Erreichen des Vorgabewertes $P_v(t)$ bzw. $M_v(t)$ konstant bleibt.

10. Verfahren nach einem der Ansprüche 1 bis 8,
dadurch gekennzeichnet,
daß der Restanteil zur Einstellung des Sollwertes $P_s(t)$ bzw. $M_s(t)$ auf den Vorgabewert $P_v(t)$ bzw. $M_v(t)$ innerhalb eines Zeitintervalls T (Verstellzeitraum) linear oder progressiv verändert wird.

11. Verfahren nach Anspruch 10,
dadurch gekennzeichnet,
daß das Zeitintervall T von der elektronischen Steuerung tendenziell umso kleiner gewählt wird, je größer die Fahrpedalverstellgeschwindigkeit $\dot{\alpha}$ ist.

12. Verfahren nach einem der Ansprüche 1 bis 8,
dadurch gekennzeichnet,
daß bei einem Fahrzeug, dessen elektrische Antriebsmotoren durch eine Verbrennungsmotor/Generator-Einheit mit elektrischem Strom versorgt werden und dessen Verbrennungsmotor in einem

10

Zustand mit eindeutigem Zusammenhang zwischen Drehmoment und Drehzahl des Verbrennungsmotors betrieben wird, der Restanteil zur Einstellung des Sollwertes $P_s(t)$ bzw. $M_s(t)$ auf den Vorgabewert $P_v(t)$ bzw. $M_v(t)$ in Abhängigkeit von der Drehzahl des Verbrennungsmotors verändert wird.

13. Verfahren nach einem der Ansprüche 1 bis 12,
dadurch gekennzeichnet,
daß dem Faktor $f_1(\alpha)$ zur Bestimmung des Vorgabewertes $P_v(\alpha)$ bzw. $M_v(\alpha)$ bei einer Neutralstellung $\alpha_n$ des Fahrpedals der Wert 0 und bei Fahrpedalstellungen zwischen 0 und $\alpha_n$ negative Werte (Bremsleistung) zur Erzeugung eines Bremsmomentes durch Umschaltung der elektrischen Antriebsmotoren auf Generatorbetrieb zugeordnet werden.

14. Verfahren nach Anspruch 13,
dadurch gekennzeichnet,
daß die Größe der Bremsleistung oder des Bremsmomentes bei vorgegebener Fahrpedalstellung zwischen 0 und $\alpha_n$ in Abhängigkeit von der aktuellen Geschwindigkeit des Fahrzeugs eingestellt wird, wobei vorzugsweise bei höheren Geschwindigkeiten tendenziell kleinere Bremsmomente vorgegeben sind.

15. Verfahren nach einem der Ansprüche 3 bis 14,
dadurch gekennzeichnet,
daß in der Gewichtungsfunktion $F = f_2(\dot{\alpha})$ für die Variable $\dot{\alpha}$ anstelle des Differentialquotienten der Differenzenquotient

$$\frac{\alpha(t_2) - \alpha(t_1)}{t_2 - t_1}$$

gesetzt wird, wobei $t_2 - t_1$ einen vorgegebenen Mindestwert nicht unterschreitet.

16. Verfahren nach einem der Ansprüche 1 bis 15,
dadurch gekennzeichnet,
daß bei Fahrzeuggeschwindigkeiten $v$ unterhalb eines vorgegebenen Wertes $v_1$ die Geschwindigkeitsänderungen nur durch Steuerung des Antriebsdrehmomentes und bei Geschwindigkeiten über einem vorgegebenen Wert $v_2$ nur durch Steuerung der Antriebsleistung vorgenommen werden.

17. Verfahren nach Anspruch 16,
dadurch gekennzeichnet,
daß der Übergang von der Momentensteuerung zur Leistungssteuerung sprunghaft bei einer Fahrzeuggeschwindigkeit $v_1 = v_2$ erfolgt.

18. Verfahren nach Anspruch 16,
dadurch gekennzeichnet,
daß der Übergang von dem Momentensteuerung zur Leistungssteuerung im Geschwindigkeitsintervall von $v_1$ bis $v_2$ gleitend erfolgt.

19. Fahrzeug zur Durchführung des Verfahrens nach Anspruch 1, mit Antriebsrädern und einem Antriebsstrang, der eine stufenlose Drehzahl/Drehmoment-Charakteristik aufweist, insbesondere mit einem elektromotorischen Antrieb, mit einer elektronischen Antriebssteuerung zur Drehzahl/Drehmoment-Einstellung im Antriebsstrang und mit einem zur Veränderung der Fahrzeuggeschwindigkeit vorgesehenen Fahrpedal, dessen Stellung $\alpha(t)$ mittels eines Sensors erfaßbar istt, wobei in der elektronischen Steuerung tabellarisch oder als Funktion Vorgabewerte für die gewünschte am Fahrzeug wirksame Antriebsleistung und/oder das gewünschte Antriebsdrehmoment hinterlegt sind, die den möglichen Fahrpedalstellungen $\alpha(t)$ eindeutig zugeordnet sind,
dadurch gekennzeichnet,
daß eine zusätzliche elektronische Steuereinheit vorgesehen ist, die signaltechnisch einerseits mit dem Sensor zur Erfassung der Fahrpedalstellung $\alpha(t)$ und andererseits als Sollwertgeber mit der Antriebssteuerung verbunden ist, wobei die zusätzliche elektronische Steuereinheit in der Weise eine Umsetzung der von dem Sensor erhaltenen Meßwerte $\alpha$ (t) in den Sollwert für die Antriebssteuerung vornimmt, daß der Sollwert in einem kurzen Verstellzeitraum bis auf den jeweiligen Vorgabewert verändert wird, wobei der Sollwert additiv aus einem anfänglichen, zum Vorgabewert proportionalen Anteil und einem zeitlich sich verändernden Restanteil gebildet wird.

**20.** Fahrzeug nach Anspruch 19,
dadurch gekennzeichnet,
daß die zusätzliche elektronische Steuereinheit signaltechnisch mit einem Sensor zur Erfassung der Fahrzeugbeschleunigung verbunden oder mit einer Differenziereinrichtung zur Errechnung der Fahrzeugbeschleunigung aus der zeitlichen Veränderung der Antriebsräderdrehzahlen ausgestattet ist.

**21.** Fahrzeug nach einem der Ansprüche 19 oder 20,
dadurch gekennzeichnet,
daß der oder die Elektromotoren des Fahrzeugantriebs als permanent erregte Gleichstrommotoren mit elektronischer Kommutierung ausgebildet sind.

**Claims**

**1.** A method for changing the speed of a vehicle with drive wheels and with infinitely variable speed/torque characteristic in the drive line, in particular a vehicle having an electric motor drive corresponding to a change in the position $\alpha(t)$ of an accelerator pedal effected by the driver of the vehicle, with a certain drive power $P_v(\alpha) = f_1 (\alpha) \times P_{max}$ (with $P_{max}$ = maximum drive power of the vehicle) which is desired in the manner of a set value and acts on the vehicle and/or an effective driving torque $M_v(\alpha) = f_1(\alpha) \times M_{max}$ (with $M_{max}$ = maximum driving torque of the vehicle) being associated with each accelerator pedal position $\alpha(t)$, the set value being used as the desired value for an electronic drive control of the vehicle,
characterised in that
an additional electronic control unit converts the set value $P_v(t)$ and/or $M_v(t)$ in the form as a desired value $P_s(t)$ or $M_s(t)$ respectively for the electronic drive control, that the desired value $P_s(t)$ or $M_s(t)$ is changed up to the set value $P_v(t)$ or $M_v(t)$ by the drive control within a short adjustment period, the desired value $P_s(t)$ or $M_s(t)$ being formed additively from an initial portion proportional to the set value $P_v(t)$ or $M_v(t)$ and a remaining portion which changes with time.

**2.** A method according to Claim 1, characterised in that the portion proportional to the set value $P_v(t)$ or $M_v(t)$ is formed as the total of the current desired value $P_s(t)$ or $M_s(t)$ of the drive control and the product of a weighting factor F which is between 0 and 1, and the difference between the set value $P_v(t)$ or $M_v(t)$ and the current desired value $P_s(t)$ or $M_s(t)$.

**3.** A method according to Claim 2, characterised in that the size of the factor F is determined as a function of the speed of actuation $\dot{\alpha}$ of the accelerator pedal:

$$F = f_2(\dot{\alpha}).$$

**4.** A method according to Claim 2, characterised in that the size of the factor F is determined as a function of the current desired value $P_s(t)$ or $M_s(t)$ of the drive control:

$$F = f_3(P_s(t))$$
$$\text{or } F = f_3(M_s(t)).$$

**5.** A method according to Claim 2, characterised in that the size of the factor F is determined as a function of the set value $P_v(t)$ or $M_v(t)$:

$$F = f_4(P_v(t))$$
$$\text{or } F = f_4(M_v(t)).$$

**6.** A method according to Claim 3, characterised in that the function course of the weighting factor $F = f_2(\dot{\alpha})$ is selected to increase progressively and the function value F remains above a preset threshold value of the variables $\dot{\alpha}$ at the constant maximum value 1.

12

7. A method according to Claim 4, characterised in that the function course of the weighting factor F is selected to increase linearly and the function value F remains above a preset threshold value of the variables $P_s(t)$ or $M_s(t)$ at the constant maximum value 1.

8. A method according to Claim 5, characterised in that the function course of the weighting factor F is selected to increase linearly and the function value F remains above a preset threshold value of the variables $P_v(t)$ or $M_v(t)$ at the constant maximum value 1.

9. A method according to one of Claims 1 to 8, characterised in that the vehicle acceleration is detected by means of an acceleration sensor or by means of the time derivation of the speeds of rotation of the drive wheels and the remaining portion for setting the desired value $P_s(t)$ or $M_s(t)$ to the set value $P_v(t)$ or $M_v(t)$ is changed over time such that the vehicle acceleration remains constant between the time at which the changed accelerator pedal position $\alpha(t)$ and the set value $P_v(t)$ or $M_v(t)$ are reached.

10. A method according to one of Claims 1 to 8, characterised in that the remaining portion for setting the desired value $P_s(t)$ or $M_s(t)$ to the set value $P_v(t)$ or $M_v(t)$ is changed linearly or progressively within a time interval T (adjustment period).

11. A method according to Claim 10, characterised in that the time interval T is selected by the electronic control to tend to be smaller, the larger the accelerator pedal adjustment speed $\dot{\alpha}$ is.

12. A method according to one of Claims 1 to 8, characterised in that for a vehicle of which the electric drive motors are supplied with electric current through an internal combustion engine/generator unit and the internal combustion engine of which is operated in a state with a clear connection between the torque and speed of rotation of the internal combustion engine, the remaining portion for setting the desired value $P_s(t)$ or $M_s(t)$ to the set value $P_v(t)$ or $M_v(t)$ is changed as a function of the speed of the internal combustion engine.

13. A method according to one of Claims 1 to 12, characterised in that in a neutral position $\alpha_n$ of the accelerator pedal the value 0 and for accelerator pedal positions between 0 and $\alpha_n$ negative values (braking power) for producing a braking torque by switching the electric drive motors to generator operation are assigned to the factor $f_1(\alpha)$ for determining the set value $P_v(\alpha)$ or $M_v(\alpha)$.

14. A method according to Claim 13, characterised in that the size of the braking power or of the braking torque at a preset accelerator pedal position between 0 and $\alpha_n$ is set as a function of the current speed of the vehicle, with preferably a tendency to smaller braking torques being preset for higher speeds.

15. A method according to one of Claims 3 to 14, characterised in that in the weighting function $F = f_2(\dot{\alpha})$ instead of the differential quotient the difference quotient

$$\frac{\alpha(t_2) - \alpha(t_1)}{t_2 - t_1}$$

is set for the variable $\dot{\alpha}$, wherein $t_2 - t_1$ is not less than a preset minimum value.

16. A method according to one of Claims 1 to 15, characterised in that at vehicle speeds v below a preset value $v_1$ the speed changes are only effected by controlling the driving torque, and at speeds above a preset value $v_2$ only by controlling the drive power.

17. A method according to Claim 16, characterised in that the transition from the torque control to the power control takes place discontinuously at a vehicle speed $v_1 = v_2$.

18. A method according to Claim 16, characterised in that the transition from the torque control to the power control takes place smoothly in the speed interval from $v_1$ to $v_2$.

**19.** A vehicle for performing the method according to Claim 1, with drive wheels and a drive line which has an infinitely variable speed/torque characteristic, in particular with an electric motor drive, with an electronic drive control for setting the speed/torque in the drive line and with an accelerator pedal provided for changing the vehicle speed, the position $\alpha(t)$ of which can be detected by means of a sensor, with set values for the desired drive power acting on the vehicle and/or the desired driving torque being registered in tabular form or as function in the electronic control, which values are clearly assigned to the possible accelerator pedal positions $\alpha(t)$,
characterised in that
an additional electronic control unit is provided which is connected signal-wise firstly to the sensor for detecting the accelerator pedal position $\alpha(t)$ and secondly as a set-point device to the drive control, the additional electronic control unit effecting a conversion of the measured values $\beta(t)$ obtained by the sensor into the desired value for the drive control such that the desired value is changed up to the respective set value within a short adjustment period, the desired value being formed additively by an initial portion proportional to the set value and a remaining portion which changes with time.

**20.** A vehicle according to Claim 19, characterised in that the additional electronic control unit is connected signal-wise to a sensor for detecting the vehicle acceleration or is equipped with a differentiating means for calculating the vehicle acceleration from the change over time of the speed of rotation of the drive wheels.

**21.** A vehicle according to one of Claims 19 or 20, characterised in that the electric motor or motors of the vehicle drive are designed as permanently excited direct-current motors with electronic commutation.

**Revendications**

**1.** Procédé pour modifier la vitesse d'un véhicule, comportant des roues d'entraînement et une caractéristique de couple/vitesse de rotation continue dans la ligne d'entraînement, en particulier d'un véhicule à entraînement électromotorisé, correspondant à une modification, effectuée par le conducteur du véhicule, de la position $\alpha$ (t) d'une pédale d'accélérateur, une puissance d'entraînement déterminée, efficace sur le véhicule, souhaitée dans le sens d'une valeur prévue ($P_v$ ($\alpha$) = $f_1$ ($\alpha$) x $P_{max}$ (avec $P_{max}$ = puissance d'entraînement maximale du véhicule) et/ou un couple d'entraînement efficace $M_v$ ($\alpha$) = $f_1$ ($\alpha$) x $M_{max}$ (avec $M_{max}$ = couple d'entraînement maximal du véhicule) étant associés à chaque position de la pédale d'accélérateur $\alpha$ (t), la valeur prévue étant utilisée comme valeur de consigne pour une commande d'entraînement électronique du véhicule,
caractérisé en ce qu'une unité de commande électronique supplémentaire convertit la valeur prévue $P_v$ (t) et/ou $M_v$ (t) sous la forme de la valeur de consigne $P_s$ (t) ou $M_s$ (t) pour la commande de l'entraînement électronique, en ce que la valeur de consigne $P_s$ (t) ou $M_s$ (t) est modifiée par la commande de l'entraînement dans un intervalle de temps de réglage court jusqu'à la valeur prévue $P_v$ (t) ou $M_v$ (t), la valeur de consigne $P_s$ (t) ou $M_s$ (t) étant formée, de façon additive, à partir d'une partie initiale proportionnelle à la valeur prévue $P_v$ (t) ou $M_v$ (t) et d'une partie résiduelle se modifiant dans le temps.

**2.** Procédé selon la revendication 1,
caractérisé en ce que la partie Proportionnelle à la valeur prévue $P_v$ (t) ou $M_v$ (t) est formée comme la somme à partir de la valeur de consigne actuelle $P_s$ (t) ou $M_s$ (t) de la commande de l'entraînement et du produit d'un facteur de pondération F, qui vaut entre 0 et 1, et de la différence de la valeur prévue $P_v$ (t) ou $M_v$ (t) et de la valeur de consigne actuelle $P_s$ (t) ou $M_s$ (t).

**3.** Procédé selon la revendication 2,
caractérisé en ce que la valeur du facteur F est déterminée en fonction de la vitesse d'actionnement $\alpha$ de la pédale d'accélérateur :

$$F = f_2 (\alpha)$$

**4.** Procédé selon la revendication 2,
caractérisé en ce que la valeur du facteur F est déterminée en fonction de la valeur de consigne actuelle $P_s$ (t) ou $M_s$ (t) de la commande d'entraînement :

F = f₃ (Pₛ(t))

$F = f_3 (P_s(t))$
ou $F = f_3 (M_s(t))$

5. Procédé selon la revendication 2,
caractérisé en ce que la valeur du facteur F est déterminée en fonction de la valeur prévue $P_v$ (t) ou $M_v$ (t) :

$F = f_4 (P_v(t))$
ou $F = f_4 (M_v(t))$

6. Procédé selon la revendication 3,
caractérisé en ce que la variation de la fonction du facteur de pondération $F = f_2 (\alpha)$ est choisie en étant progressivement croissante, et la valeur F de la fonction, au-dessus d'une valeur de seuil prédéfinie de la variable $\alpha$, reste à la valeur maximale constante 1.

7. Procédé selon la revendication 4,
caractérisé en ce que la variation de la fonction du facteur de pondération F est choisie en étant linéairement croissante, et la valeur de la fonction F, au-dessus d'une valeur de seuil prédéfinie de la variable $P_s$ (t) ou $M_s$ (t), demeure à la valeur maximale constante 1.

8. Procédé selon la revendication 5,
caractérisé en ce que la variation de la fonction du facteur de pondération F est choisie en étant linéairement croissante, et la valeur de la fonction F, au-dessus d'une valeur de seuil prédéfinie de la variable $P_v$ (t) ou $M_v$ (t), demeure à la valeur maximale constante 1.

9. Procédé selon une des revendications 1 à 8,
caractérisé en ce que l'accélération du véhicule est déterminée par un capteur d'accélération ou par la dérivation des vitesses de rotation des roues d'entraînement, et la partie restante pour régler la valeur de consigne $P_s$ (t) ou $M_s$ (t) à la valeur prévue $P_v$ (t) ou $M_v$ (t) est modifiée dans le temps de sorte que l'accélération du véhicule demeure constante entre le moment où la position modifiée de la pédale d'accélérateur $\alpha$ (t) est atteinte et quand la valeur prévue $P_v$ (t) ou $M_v$ (t) est atteinte.

10. Procédé selon une des revendications 1 à 8,
caractérisé en ce que la partie résiduelle pour régler la valeur de consigne $P_s$ (t) ou $M_s$ (t) à la valeur prévue $P_v$ (t) ou $M_v$ (t) est modifiée de façon linéaire ou progressive à l'intérieur d'un intervalle de temps T (intervalle de temps de réglage).

11. Procédé selon la revendication 10,
caractérisé en ce que l'intervalle de temps T est choisi par la commande électronique, de façon tendancielle, d'autant plus petit que la vitesse de réglage de la pédale d'accélérateur $\alpha$ est grande.

12. Procédé selon une des revendications 1 à 8,
caractérisé en ce que, pour un véhicule dont les moteurs d'entraînement électriques sont alimentés en courant électrique par une unité moteur à combustion interne/génératrice, et dont le moteur à combustion interne fonctionne dans un état ayant une relation univoque entre le couple et la vitesse de rotation du moteur à combustion interne, la partie résiduelle pour régler la valeur de consigne $P_s$ (t) ou $M_s$ (t) à la valeur prévue $P_v$ (t) ou $M_v$ (t) est modifiée en fonction de la vitesse de rotation du moteur à combustion interne.

13. Procédé selon une des revendications 1 à 12,
caractérisé en ce que, au facteur $f_1$ ($\alpha$), pour déterminer la valeur prévue $P_v$ ($\alpha$) ou $M_v$ ($\alpha$) pour une position neutre $\alpha_n$ de la pédale d'accélérateur, il est associé la valeur 0 et, pour des positions de la pédale d'accélérateur entre 0 et $\alpha_n$, des valeurs négatives (puissance de freinage) pour engendrer un couple de freinage en passant des moteurs d'entraînement électriques au fonctionnement en génératrice.

14. Procédé selon la revendication 13,
caractérisé en ce que la valeur de la puissance de freinage ou du couple de freinage, pour une position de la pédale d'accélérateur prédéfinie entre 0 et $\alpha_n$, est réglée en fonction de la vitesse actuelle du véhicule, des couples de freinage plus petits étant tendanciellement prédéfinis, avantageusement pour des vitesses plus élevées.

**15.** Procédé selon une des revendications 3 à 14, caractérisé en ce que, dans la fonction de pondération F = $f_2$ ($\alpha$), pour la variable $\alpha$, à la place du quotient différentiel, le quotient des différences

$$\frac{\alpha(t_2) - \alpha(t_1)}{t_2 - t_1}$$

est établi, $t_2 - t_1$ ne dépassant pas une valeur minimale prédéfinie.

**16.** Procédé selon une des revendications 1 à 15, caractérisé en ce que, pour des vitesses du véhicule v au-dessous d'une valeur prédéfinie $v_1$, les modifications de vitesse ne sont effectuées que par commande du couple d'entraînement et, pour des vitesses au-dessus d'une valeur prédéfinie $v_2$, que par commande de la puissance d'entraînement.

**17.** Procédé selon la revendication 16, caractérisé en ce que la transition de la commande de couple à la commande de puissance est effectuée brusquement pour une vitesse du véhicule $v_1$ = $v_2$.

**18.** Procédé selon la revendication 16, caractérisé en ce que la transition de la commande de couple à la commande de puissance est effectuée en glissement dans l'intervalle de vitesse de $v_1$ à $v_2$.

**19.** Véhicule pour la mise en oeuvre du procédé selon la revendication 1, comportant des roues d'entraînement et une ligne d'entraînement, qui présente une caractéristique couple/vitesse de rotation continue, en particulier ayant un entraînement électromotorisé, comportant une commande d'entraînement électronique pour le réglage couple/vitesse de rotation dans la ligne d'entraînement et une pédale d'accélérateur prévue pour modifier la vitesse du véhicule, dont la position $\alpha$ (t) peut être détectée au moyen d'un capteur, des valeurs prévues pour la puissance d'entraînement souhaitée efficace sur le véhicule et/ou le couple d'entraînement souhaité étant mémorisées, de façon tabulaire ou sous forme de fonction, dans la commande électronique, lesquelles valeurs sont associées de façon univoque aux positions possibles de la pédale d'accélérateur $\alpha$ (t), caractérisé en ce qu'il est prévu une unité de commande électronique supplémentaire qui est reliée, par des signaux, d'une part au capteur pour détecter la position de la pédale d'accélérateur $\alpha$ (t) et, d'autre part, comme transmetteur de valeurs de consigne, à la commande d'entraînement, l'unité de commande électronique supplémentaire effectuant une conversion des valeurs de mesure $\alpha$ (t) obtenues par le capteur en la valeur de consigne pour la commande d'entraînement, de sorte que la valeur de consigne est modifiée, en un court intervalle de temps de réglage, jusqu'à la valeur prévue respective, la valeur de consigne étant formée, de façon additive, d'une partie initiale proportionnelle à la valeur prévue et d'une partie résiduelle se modifiant dans le temps.

**20.** Véhicule selon la revendication 19, caractérisé en ce que l'unité de commande électronique supplémentaire est reliée, par des signaux, à un capteur pour détecter l'accélération du véhicule ou est équipée d'un dispositif différenciateur pour calculer l'accélération du véhicule à partir de la modification temporelle des vitesses de rotation des roues d'entraînement.

**21.** Véhicule selon une des revendications 19 ou 20, caractérisé en ce que le ou les moteurs électriques de l'entraînement du véhicule sont réalisés en tant que moteurs à courant continu excités de façon permanente, à commutation électronique.

Fig.1

Fig.2

Fig.3

Fig.4

$f_3, f_4$

1

0

$P_S(\alpha_a), P_S(\alpha_e)$

Fig.5

P

$P_V(t_e), P_{St}(t_e)$

$P_S(t_1)$

B

$P_S(t_a)$

W

$P_{St}(t_a)$

0

$t_a$    $t_1$    $t_e$    t

Fig.6

$f_5$

1

0

1    t/T

Fig.7

Fig.8

Fig.9